# EUROPEAN PATENT SPECIFICATION

(11) **EP 3 120 745 B1**
(45) Date of publication and mention of the grant of the patent: **16.05.2018**
(21) Application number: 16180288.9
(22) Date of filing: 20.07.2016
(51) Int. Cl.: A47L 15/00, A47L 15/42

(54) **DISHWASHER WITH LOW CONSUMPTION OF NET-WATER WITH REGENERATION BY MEMBRANE FILTERING OF A SOLUTION OF RECYCLING ALREADY IN USE IN THE DISHWASHER**
GESCHIRRSPÜLMASCHINE MIT GERINGEM VERBRAUCH VON NETZWASSER MIT REGENERATION DURCH MEMBRANFILTRATION EINER LÖSUNG ZUM RECYCLING, DIE BEREITS IN VERWENDUNG IN DER GESCHIRRSPÜLMASCHINE IST
LAVE-VAISSELLE À FAIBLE CONSOMMATION D'EAU NETTE AVEC FILTRAGE PAR MEMBRANE DE RÉGÉNÉRATION D'UNE SOLUTION DE RECYCLAGE DÉJÀ UTILISÉE DANS LE LAVE-VAISSELLE

(30) Priority: 23.07.2015 IT UB20152427
(43) Date of publication of application: 25.01.2017
(73) Proprietor: ALI S.p.A., 20123 Milano (IT)
(72) Inventor: BERTI, Luciano, 20060 Bussero (MI) (IT); DI GIORGIO, Antonio, 20132 MILANO (IT)
(74) Representative: Di Gennaro, Sergio

(56) References cited:
- EP-A1- 2 772 178
- WO-A1-2014/047896
- DE-A1-102010 011 471
- DE-A1-102010 053 051

## Description

The present invention refers to a dishwasher with low consumption of net water.

In particular, the present invention refers to a dishwasher capable of regenerating through membrane filtering a recycle solution already in use in the dishwasher.

As known, indeed, by regenerating at least part of the solution already in use in the dishwasher a smaller amount of net water is required.

The use of filters inside dishwashers is *per se* known.

For example, European patent application EP14157064, to the same Applicant, teaches to make a dishwasher equipped with a filter supply by net water.

The purpose of such a filter is on the one hand to carry out a better final rinse with demineralised water and on the other hand to reduce the amount of net water required by using the remaining part of extra-mineralised water for washing.

In such a patent application, therefore, the problem of optimising net water is analysed, without however mentioning the problem of how to be able to regenerate the washing or rinsing solution already in use in the dishwasher.

WO2014/047896A1 discloses a washing machine and a corresponding method for cleaning ware or laundry items.

US4156621 also describes a tunnel dishwasher provided with a membrane filter.

US4156621, as in particular clearly described in column 3 lines 11-20, tackles the problem of how to regenerate the washing or rinsing solution already in use in the dishwasher. In particular, such a solution already in use is divided into a demineralised water fraction sent for final rinsing and into an extra-mineralised water fraction sent to the washing or pre-washing area.

However, US4156621 does not analyse the problem of controlling and optimising the amount of net water.

From such a prior art, the purpose of the present invention is to make a dishwasher with low consumption of net water that is an alternative to known ones and capable of requiring smaller amounts of net water for the same or better results.

In particular, the purpose of the present invention is to regenerate the solution already in use in the dishwasher and at the same time optimise the amount of net water required.

In other words, the purpose is to regenerate the water present in one or more washing or rinsing tanks by reducing the amount of minerals and contaminating substances (including detergent) therein, possibly until complete removal, in order to reuse it to carry out a pre-rinse or a final rinse with consequent partial or total reduction of the water taken from the net.

In general, these purposes according to the present invention are accomplished thanks to a three-way valve arranged upstream of a membrane filter where such a three-way valve is supplied along an inlet way by net water and along another inlet way by a recycle solution already in use in the dishwasher.

In this way, the solution to be filtered delivered along an outlet way of the three-way valve and in inlet to the membrane filter can selectively consist of:
- net water only;
- recycle solution only;
- a mixture of net water and the recycle solution.

By doing this, thanks to a control unit of the valve connected to sensors for detecting the characteristics of the net water and of the recycle solution, an optimal regeneration of the solution already in use is allowed, with consequent saving of net water, without harming the quality of the rinse.

Further characteristics of the invention are highlighted by the dependent claims.

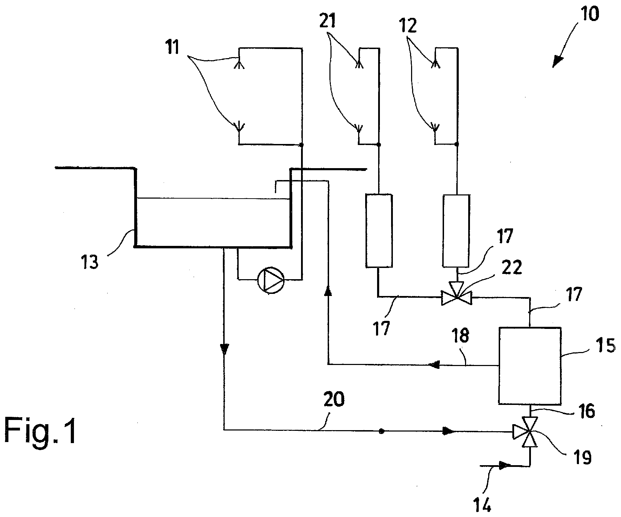

The characteristics and advantages of a dishwasher with low consumption of net water according to the present invention will become clearer from the following description, given as an example and not for limiting purposes, referring to the attached schematic drawings, in which figures 1-3 show three embodiments of dishwasher having low consumption of net water according to the present invention with 10.

Such a dishwasher 10 is of the type comprising washing nozzles 11 and rinsing nozzles 12.

The dishwasher 10 also comprises a washing tank 13 associated with the washing nozzles 11 such that on the one hand the solution delivered by the washing nozzles 11 is collected in the washing tank 13 and on the other the washing nozzles 11 are supplied by the solution collected in the washing tank 13.

A net water inlet 14 and a membrane filter 15, wherein such a membrane filter 15 comprises an inlet for a solution to be filtered 16, a first outlet for a permeate solution 17 filtered by the membrane filter 15 and a second outlet for a concentrated solution 18 of residue of the membrane filter 15 are provided.

Such a permeate solution 17, being demineralised, is supplied to the rinsing nozzles 12.

According to the invention, the dishwasher 10 comprises a three-way valve 19 upstream of the inlet of the membrane filter 15.

Such a three-way valve 19 is supplied along an inlet way by the net water 14 and along another inlet way by a recycle solution 20 already in use in the dishwasher 10.

In this way, the solution to be filtered 16 delivered along the outlet way of the three-way valve 19 and in inlet to the membrane filter 15 can selectively consist of:
- net water 14 only;
- recycle solution 20 only;
- a mixture of net water 14 and the recycle solution 20.

The dual advantage of reducing consumption without compromising the rinse quality is thus obtained.

In order to control the three-way valve 19, the dishwasher 10 comprises a control unit, not shown, connected to sensors for detecting the characteristics of the net water 14 and of the recycle solution 20.

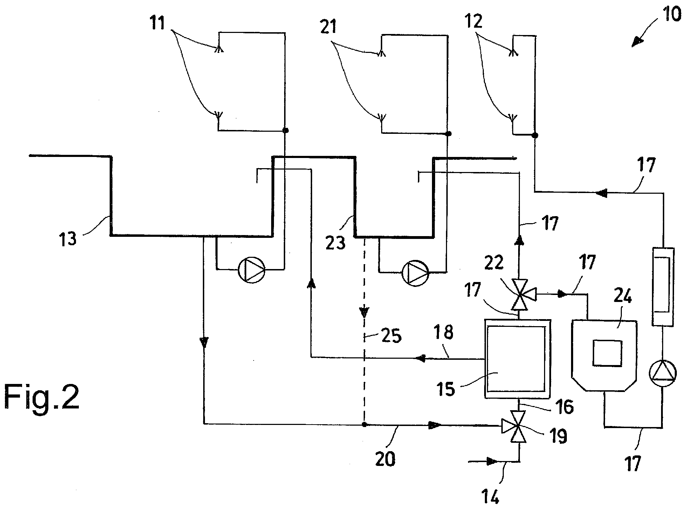

According to the example of figures 1 and 2, the recycle solution 20 comprises the solution collected in the washing tank 13 and the concentrated solution 18 is supplied to the washing tank 13.

The dishwasher 10 can comprise pre-rinsing nozzles 21 supplied directly by the permeate solution 17 in outlet from the membrane filter 15.

In this case, the dishwasher 10 comprises a three-way valve 22 downstream of the membrane filter 15 configured to selectively direct the permeate solution 17 towards the rinsing nozzles 12 and/or towards the pre-rinsing nozzles 21.

As can be seen in figure 2, the pre-rinsing nozzles 21 can be associated with a pre-rinsing tank 23 such that on the one hand the solution delivered by the pre-rinsing nozzles 21 is collected in the pre-rinsing tank 23 and on the other the pre-rinsing nozzles 21 are supplied by the solution collected in the pre-rinsing tank 23.

The three-way valve 22 downstream of the membrane filter is in this case configured to selectively direct the permeate solution 17 towards the rinsing nozzles 12 and/or towards the pre-rinsing tank 23.

Optionally, an accumulation tub 24 is arranged between the membrane filter 15 and the rinsing nozzles 12.

In such an embodiment of figure 2, the recycle solution 20 can also comprise the solution 25 collected in the pre-rinsing tank 23.

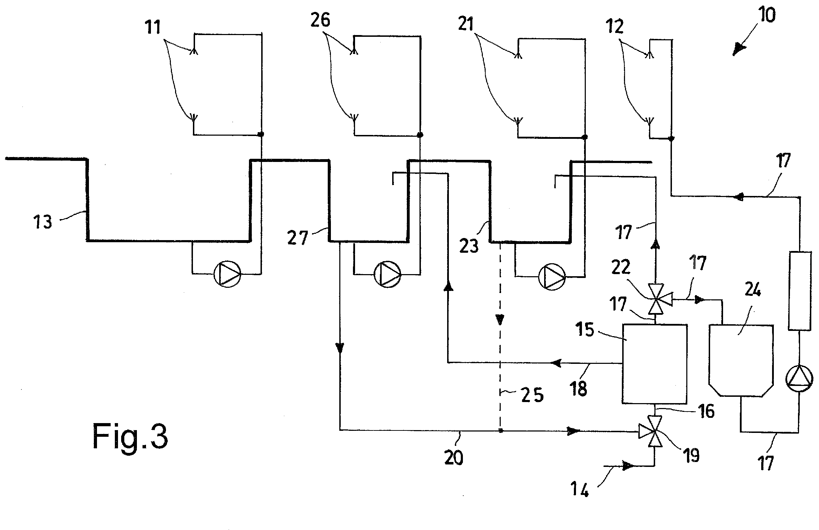

Figure 3 shows a third embodiment of the invention.

In such an embodiment the dishwasher 10 comprises pre-rinsing nozzles 21 and dripping nozzles 26.

The pre-rinsing nozzles 21 are associated with a pre-rinsing tank 23, such that on the one hand the solution delivered by the pre-rinsing nozzles 21 is collected in the pre-rinsing tank 23 and on the other hand the pre-rinsing nozzles 21 are supplied by the solution collected in the pre-rinsing tank 23.

The dripping nozzles 26 are associated with a dripping tank 27, such that on the one hand the solution delivered by the dripping nozzles 26 is collected in the dripping tank 27 and on the other hand the dripping nozzles 26 are supplied by the solution collected in the dripping tank 27.

There is a three-way valve 22 downstream of the membrane filter 15 configured to selectively direct the permeate solution 17 towards the rinsing nozzles 12 and/or towards the pre-rinsing tank 23.

In such an embodiment, the recycle solution 20 comprises the solution collected in the dripping tank 27, whereas the concentrated solution 18 is supplied to the dripping tank 27.

Moreover, optionally, the recycle solution 20 can also comprise the solution 25 collected in the pre-rinsing tank 23.

Finally, it should be specified that, in a known manner, the dishwasher 10 can comprise pumps for the delivery of the various solutions and heating boilers.

Of course, the term "membrane filter" is meant to indicate not only reverse osmosis, nanofiltration, ultrafiltration and microfiltration filters, but also equivalent filters.

It has thus been seen that a dishwasher having low consumption of net water according to the present invention achieves the purposes highlighted earlier.

The dishwasher having low consumption of net water of the present invention thus conceived can undergo numerous modifications and variants, all of which are covered by the same inventive concept; moreover, all of the details can be replaced by technically equivalent elements. In practice, the materials used, as well as their sizes, can be of any type depending on the technical requirements.

## Claims

1. Dishwasher (10) of the type comprising washing nozzles (11) and rinsing nozzles (12), said dishwasher (10) further comprising a washing tank (13) associated with said washing nozzles (11), such that on the one hand the solution delivered from said washing nozzles (11) is collected in said washing tank (13) and on the other said washing nozzles (11) are supplied by the solution collected in said washing tank (13); there being provided a net water inlet (14) and a membrane filter (15); said membrane filter (15) comprising an inlet for a solution to be filtered (16), a first outlet for a permeate solution (17) filtered by said membrane filter (15) and a second outlet for a concentrated solution (18) of the residue of said membrane filter (15); said permeate solution (17) being supplied to said rinsing nozzles (12);
**characterized in that** it comprises a three-way valve (19) upstream of said membrane filter (15) inlet; said three-way valve (19) being supplied along an inlet way by said net water (14) and along another inlet way by a recycle solution (20) already in use in said dishwasher (10), such that said solution to be filtered (16) delivered along an outlet way of said three-way valve (19) and input to said membrane filter (15) selectively consists of:
- said net water (14) only;
- said recycle solution (20) only;
- a mixture of said net water (14) and said recycle solution (20).

2. Dishwasher (10) according to claim 1, **characterized in that** it comprises a control unit of said three-way valve (19), said control unit being connected to sensors for detecting the characteristics of said net water (14) and said recycle solution (20).

3. Dishwasher (10) according to any one preceding claim, **characterized in that** said recycle solution (20) comprises the solution collected in said washing tank (13); said concentrated solution (18) being supplied to said washing tank (13).

4. Dishwasher (10) according to claim 3, **characterized in that** it comprises pre-rinsing nozzles (21); said pre-rinsing nozzles (21) being supplied by said permeate solution (17) output from said membrane filter (15).

5. Dishwasher (10) according to claim 4, **characterized in that** it comprises a three-way valve (22) downstream of said membrane filter (15); said three-way valve (22) being configured to selectively direct said permeate solution (17) towards said rinsing nozzles (12) and/or towards said pre-rinsing nozzles (21) .

6. Dishwasher (10) according to claim 3 or 2, **characterized in that** it comprises pre-rinsing nozzles (21) associated with a pre-rinsing tank (23), such that on the one hand the solution delivered by said pre-rinsing nozzles (21) is collected in said pre-rinsing tank (23) and on the other said pre-rinsing nozzles (21) are supplied by the solution collected in said pre-rinsing tub (23); a three-way valve (22) being provided for downstream of said membrane filter (15); said three-way valve (22) being configured to selectively direct said permeate solution (17) towards said rinsing nozzles (12) and/or towards said pre-rinsing tank (23).

7. Dishwasher (10) according to claim 6, **characterized in that** it comprises an accumulation tub (24) placed between said membrane filter (15) and said rinsing nozzles (12).

8. Dishwasher (10) according to claim 7 or 6 **characterized in that** said recycle solution (20) further comprises the solution (25) collected in said pre-rinsing tank (23).

9. Dishwasher (10) according to claim 1 or 2, **characterized in that** it comprises pre-rinsing nozzles (21) associated with a pre-rinsing tank (23), such that on the one hand the solution delivered by said pre-rinsing nozzles (21) is collected in said pre-rinsing tank (23) and on the other said pre-rinsing nozzles (21) are supplied by the solution collected in said pre-rinsing tank (23); a three-way valve (22) being provided for downstream of said membrane filter (15); said three-way valve (22) being configured to selectively direct said permeate solution (17) towards said rinsing nozzles (12) and/or towards said pre-rinsing tank (23); dripping nozzles (26) being provided for associated with a dripping tank (27), such that on the one hand the solution delivered by said dripping nozzles (26) is collected in said dripping tank (27) and on the other said dripping nozzles (26) are supplied by the solution collected in said dripping tank (27); said recycle solution (20) comprising the solution collected in said dripping tank (27) and said concentrated solution (18) being supplied to said dripping tank (27).

10. Dishwasher (10) according to claim 9, **characterized in that** said recycle solution (20) further comprises the solution (25) collected in said pre-rinsing tank (23).

## Patentansprüche

1. Geschirrspülmaschine (10) des Typs, der Waschdüsen (11) und Spüldüsen (12) umfasst, wobei die Geschirrspülmaschine (10) weiter einen Waschtank (13) umfasst, der verbunden ist mit der Waschdüsen (11), sodass einerseits die Lösung, die von den Waschdüsen (11) zugeführt wird, in dem Waschtank (13) gesammelt wird, und andererseits den Waschdüsen (11) die in dem Waschtank (13) gesammelte Lösung zugeführt wird; wobei ein Netzwassereinlass (14) und ein Membranfilter (15) vorgesehen sind; wobei der Membranfilter (15) einen Einlass für eine zu filternde Lösung (16) umfasst, einen ersten Auslass für eine Permeatlösung (17), die durch den Membranfilter (15) gefiltert wird, und einen zweiten Auslass für eine konzentrierte Lösung (18) des Rückstands des Membranfilters (15); wobei die Permeatlösung (17) den Spüldüsen (12) zugeführt wird; **dadurch gekennzeichnet, dass** sie ein Dreiwegventil (19) stromaufwärts des Einlasses des Membranfilters (15) umfasst; wobei dem Dreiwegventil (19) längs eines Einlasswegs Netzwasser (14) zugeführt wird und längs eines anderen Einlassweges eine in der Geschirrspülmaschine (10) bereits in Verwendung befindliche Recyclinglösung (20) zugeführt wird, so dass die zu filternde Lösung (16), die längs eines Auslassweges des Dreiwegventils (19) zugeführt und in den Membranfilter (15) eingelassen wird, wahlweise aus Folgendem besteht:
- ausschließlich Netzwasser (14);
- ausschließlich Recyclinglösung (20);
- eine Mischung aus Netzwasser (14) und Recyclinglösung (20) .

2. Geschirrspülmaschine (10) nach Anspruch 1, **dadurch gekennzeichnet, dass** sie eine Steuereinheit des Dreiwegventils (19) umfasst, wobei die Steuereinheit mit Sensoren zum Erfassen der Merkmale des Netzwassers (14) und der Recyclinglösung (20) verbunden ist.

3. Geschirrspülmaschine (10) nach einem der vorstehenden Ansprüche, **dadurch gekennzeichnet, dass** die Recyclinglösung (20) die in dem Waschtank (13) gesammelte Lösung umfasst; wobei die konzentrierte Lösung (18) dem Waschtank (13) zugeführt wird.

4. Geschirrspülmaschine (10) nach Anspruch 3, **dadurch gekennzeichnet, dass** sie Vorspüldüsen (21) umfasst; wobei den Vorspüldüsen (21) die aus dem Membranfilter (15) ausgelassene Permeatlösung (17) zugeführt wird.

5. Geschirrspülmaschine (10) nach Anspruch 4, **dadurch gekennzeichnet, dass** sie ein Dreiwegventil (22) stromabwärts des Membranfilters (15) umfasst; wobei das Dreiwegventil (22) ausgebildet ist, um die Permeatlösung (17) zu den Spüldüsen (12) und/oder zu den Vorspüldüsen (21) zu leiten.

6. Geschirrspülmaschine (10) nach Anspruch 3 oder 2, **dadurch gekennzeichnet, dass** sie Vorspüldüsen (21) umfasst, die mit einem Vorspültank (23) verbunden sind, derart, dass einerseits die von den Vorspüldüsen (21) zugeführte Lösung in dem Vorspültank (23) gesammelt wird und andererseits den Vorspüldüsen (21) die Lösung zugeführt wird, die in der Vorspülwanne (23) gesammelt wird; wobei ein Dreiwegventil (22) stromabwärts des Membranfilters (15) vorgesehen ist; wobei das Dreiwegventil (22) ausgebildet ist, um die Permeatlösung (17) wahlweise zu den Spüldüsen (12) und/oder zu den Vorspültank (23) zu leiten.

7. Geschirrspülmaschine (10) nach Anspruch 6, **dadurch gekennzeichnet, dass** sie eine Sammelwanne (24) umfasst, die zwischen dem Membranfilter (15) und den Spüldüsen (12) angeordnet ist.

8. Geschirrspülmaschine (10) nach Anspruch 7 oder 6, **dadurch gekennzeichnet, dass** die Recyclinglösung (20) weiter die Lösung (25) umfasst, die in dem Vorspültank (23) gesammelt wird.

9. Geschirrspülmaschine (10) nach Anspruch 1 oder 2, **dadurch gekennzeichnet, dass** sie Vorspüldüsen (21) umfasst, die mit einem Vorspültank (23) verbunden sind, derart, dass einerseits die von den Vorspüldüsen (21) zugeführte Lösung in dem Vorspültank (23) gesammelt wird und andererseits den Vorspüldüsen (21) die Lösung zugeführt wird, die in dem Vorspültank (23) gesammelt wird; wobei ein Dreiwegventil (22) stromabwärts des Membranfilters (15) vorgesehen ist; wobei das Dreiwegventil (22) ausgebildet ist, um die Permeatlösung (17) wahlweise zu den Spüldüsen (12) und/oder zu dem Vorspültank (23) zu leiten; wobei Tropfdüsen (26) vorgesehen sind, die mit einem Tropftank (27) verbunden sind, derart, dass einerseits die Lösung, die von den Tropfdüsen (26) zugeführt wird, in dem Tropftank (27) gesammelt wird und andererseits den Tropfdüsen (26) die Lösung zugeführt wird, die in dem Tropftank (27) gesammelt wird; wobei die Recyclinglösung (20) die Lösung umfasst, die in dem Tropftank (27) gesammelt wird und die konzentrierte Lösung (18) dem Tropftank (27) zugeführt wird.

10. Geschirrspüler (10) nach Anspruch 9, **dadurch gekennzeichnet, dass** die Recyclinglösung (20) weiter die Lösung (25) umfasst, die in dem Vorspültank (23) gesammelt wird.

## Revendications

1. Lave-vaisselle (10) du type comprenant de buses de lavage (11) et des buses de rinçage (12), ledit lave-vaisselle (10) comprenant en outre un réservoir de lavage (13) associée auxdites buses de lavage (11), de manière que, d'une part, la solution délivrée à partir desdites buses de lavage (11) soit collectée dans ledit réservoir de lavage (13) et, d'autre part, lesdites buses de lavage (11) soient alimentées par la solution collectée dans ledit réservoir de lavage (13) : une entrée d'eau propre (14) et un filtre à membrane (15) étant prévus ; ledit filtre à membrane (15) comprenant une entrée pour une solution à filtrer (16), une première sortie pour une solution de perméat (17) filtrée par ledit filtre à membrane (15) et une deuxième sortie pour une solution concentrée (18) du résidu dudit filtre à membrane (15) ;
ladite solution de perméat (17) étant délivrée auxdites buses de rinçage (12) ;
**caractérisé en ce qu'**il comprend une vanne trois voies (19) en amont de l'entrée dudit filtre à membrane (15) ;
ladite vanne trois voies (19) étant alimentée suivant une voie d'entrée par ladite eau propre (14) et suivant une autre voie d'entrée par une solution de recyclage (20) déjà utilisée dans ledit lave-vaisselle (10), de manière que ladite solution à filtrer (16) délivrée suivant une voie de sortie de ladite vanne trois voies (19) et appliquée en entrée audit filtre à membrane (15) comprenne sélectivement :
- seulement ladite eau propre (14) ;
- seulement ladite solution de recyclage (20) ;
- un mélange de ladite eau propre (14) et ladite solution de recyclage (20).

2. Lave-vaisselle (10) selon la revendication 1, **caractérisé en ce qu'**il comprend une unité de commande de ladite vanne trois voies (19), ladite unité de commande étant connectée à des capteurs pour détecter les caractéristiques de ladite eau propre (14) et de ladite solution de recyclage (20).

3. Lave-vaisselle (10) selon une quelconque revendication précédente, **caractérisé en ce que** ladite solution de recyclage (20) comprend la solution collectée dans ledit réservoir de lavage (13) ; ladite solution concentrée (18) étant alimentée dans ledit réservoir de lavage (13).

4. Lave-vaisselle (10) selon la revendication 3, **caractérisé en ce qu'**il comprend des buses de pré-rinçage (21) ; lesdites buses de pré-rinçage (21) étant alimentées avec ladite solution de perméat (17) délivrée en sortie à partir dudit filtre à membrane (15).

5. Lave-vaisselle (10) selon la revendication 4, **caractérisé en ce qu'**il comprend une vanne trois voies (22) en aval dudit filtre à membrane (15) ; ladite vanne trois voies (22) étant configurée pour diriger sélectivement ladite solution de perméat (17) vers lesdites buses de rinçage (12) et/ou vers lesdites buses de pré-rinçage (21).

6. Lave-vaisselle (10) selon la revendication 3 ou 2, **caractérisé en ce qu'**il comprend des buses de pré-rinçage (21) associées à un réservoir de pré-rinçage (23), de manière que, d'une part, la solution délivrée par lesdites buses de pré-rinçage (21) soit collectée dans ledit réservoir de pré-rinçage (23) et, d'autre part, lesdites buses de pré-rinçage (21) soient alimentées par la solution collectée dans ledit réservoir de pré-rinçage (23) ; une vanne trois voies (22) étant disposée en aval dudit filtre à membrane (15);
ladite vanne trois voies (22) étant configurée pour diriger sélectivement ladite solution de perméat (17) vers lesdites buses de rinçage (12) et/ou vers ledit réservoir de pré-rinçage (23).

7. Lave-vaisselle (10) selon la revendication 6, **caractérisé en ce qu'**il comprend un réservoir d'accumulation (24) placé entre ledit filtre à membrane (15) et lesdites buses de rinçage (12).

8. Lave-vaisselle (10) selon la revendication 7 ou 6 **caractérisé en ce que** ladite solution de recyclage (20) comprend en outre la solution (25) collectée dans ledit réservoir de pré-rinçage (23).

9. Lave-vaisselle (10) selon la revendication 1 ou 2, **caractérisé en ce qu'**il comprend des buses de pré-rinçage (21) associée à un réservoir de pré-rinçage (23), de manière que, d'une part, la solution délivrée par lesdites buses de pré-rinçage (21) soit collectée dans ledit réservoir de pré-rinçage (23) et, d'autre part, lesdites buses de pré-rinçage (21) soient alimentées par la solution collectée dans ledit réservoir de pré-rinçage (23) ; une vanne trois voies (22) étant disposée en aval dudit filtre à membrane (15) ; ladite vanne trois voies (22) étant configurée pour diriger sélectivement ladite solution de perméat (17) vers lesdites buses de rinçage (12) et/ou vers ledit réservoir de pré-rinçage (23) ; des buses d'égouttement (26) étant prévues, associées à un réservoir d'égouttement (27), de manière que, d'une part, la solution délivrée par lesdites buses d'égouttement (26) soit collectée dans ledit réservoir d'égouttement (27) et, d'autre part, lesdites buses d'égouttement (26) soient alimentées avec la solution collectée dans ledit réservoir d'égouttement (27) ; ladite solution de recyclage (20) comprenant la solution collectée dans ledit réservoir d'égouttement (27) et ladite solution concentrée (18) étant délivrée audit réservoir d'égouttement (27).

10. Lave-vaisselle (10) selon la revendication 9, **caractérisé en ce que** ladite solution de recyclage (20) comprend en outre la solution (25) collectée dans ledit réservoir de pré-rinçage (23).
